(19) Europäisches Patentamt
European Patent Office
Office européen des brevets

(11) **EP 4 617 729 B1**

(12) **EUROPEAN PATENT SPECIFICATION**

(45) Date of publication and mention
of the grant of the patent:
**01.07.2026 Bulletin 2026/27**

(21) Application number: **25163128.9**

(22) Date of filing: **12.03.2025**

(51) International Patent Classification (IPC):
**G01S 13/90** (2006.01)

(52) Cooperative Patent Classification (CPC):
**G01S 13/9011**

(54) **MICROWAVE IMAGING WITH MULTIPLE-INPUT AND MULTIPLE-OUTPUT SYNTHETIC APERTURE RADAR USING COMPRESSED MULTI-COSET RANGE MIGRATION TECHNIQUE**

MIKROWELLENABBILDUNG MIT RADAR MIT SYNTHETISCHER APERTUR MIT MEHREREN EINGÄNGEN UND MEHREREN AUSGÄNGEN UNTER VERWENDUNG EINER KOMPRIMIERTEN MEHRCOSET-BEREICHSMIGRATIONSTECHNIK

IMAGERIE PAR MICRO-ONDES AVEC RADAR À OUVERTURE SYNTHÉTIQUE À ENTRÉES MULTIPLES ET SORTIES MULTIPLES UTILISANT UNE TECHNIQUE DE MIGRATION À PLAGE MULTI-COLOTS COMPRESSÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.03.2024 IN 202421018311**

(43) Date of publication of application:
**17.09.2025 Bulletin 2025/38**

(73) Proprietor: **Tata Consultancy Services Limited Maharashtra (IN)**

(72) Inventors:
• **GIGIE, Andrew**
**560066 Bengaluru, Karnataka (IN)**
• **ROKKAM, Krishna Kanth**
**560066 Bengaluru, Karnataka (IN)**
• **KUMAR, Achanna Anil**
**560066 Bengaluru, Karnataka (IN)**
• **CHAKRAVARTY, Tapas**
**700156 Kolkata, West Bengal (IN)**
• **PAL, Arpan**
**700156 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CN-A- 107 390 215**

• **GIGIE ANDREW ET AL: "MC-RMA: Multi-Coset Range Migration Algorithm for Near-Field MIMO-SAR Imaging", 2023 IEEE SENSORS, IEEE, 29 October 2023 (2023-10-29), pages 1 - 4, XP034477432, [retrieved on 20231128], DOI: 10.1109/SENSORS56945.2023.10325224**
• **ZHANG KAI ET AL: "Beyond a Gaussian Denoiser: Residual Learning of Deep CNN for Image Denoising", IEEE TRANSACTIONS ON IMAGE PROCESSING, IEEE, USA, vol. 26, no. 7, 1 July 2017 (2017-07-01), pages 3142 - 3155, XP011649039, ISSN: 1057-7149, [retrieved on 20170509], DOI: 10.1109/TIP.2017.2662206**
• **HU SHAOQING ET AL: "Multistatic MIMO Sparse Imaging Based on FFT and Low-Rank Matrix Recovery Techniques", IEEE TRANSACTIONS ON MICROWAVE THEORY AND TECHNIQUES, IEEE, USA, vol. 71, no. 3, 1 March 2023 (2023-03-01), pages 1285 - 1295, XP011935946, ISSN: 0018-9480, [retrieved on 20230307], DOI: 10.1109/TMTT.2022.3215577**
• **YANIK MUHAMMET EMIN ET AL: "Near-Field MIMO-SAR Millimeter-Wave Imaging With Sparsely Sampled Aperture Data", IEEE ACCESS, vol. 7, 4 March 2019 (2019-03-04), pages 31801 - 31819, XP011715753, [retrieved on 20190320], DOI: 10.1109/ACCESS.2019.2902859**

EP 4 617 729 B1

- WANG JIANPING ET AL: "3-D Short-Range Imaging With Irregular MIMO Arrays Using NUFFT-Based Range Migration Algorithm", IEEE TRANSACTIONS ON GEOSCIENCE AND REMOTE SENSING, IEEE, USA, vol. 58, no. 7, 1 July 2020 (2020-07-01), pages 4730 - 4742, XP011794933, ISSN: 0196-2892, [retrieved on 20200623], DOI: 10.1109/TGRS.2020.2966368

- JOSIAH SMITH ET AL: "Efficient 3-D Near-Field MIMO-SAR Imaging for Irregular Scanning Geometries", ARXIV.ORG, CORNELL UNIVERSITY LIBRARY, 201 OLIN LIBRARY CORNELL UNIVERSITY ITHACA, NY 14853, 3 May 2023 (2023-05-03), XP091500565, DOI: 10.1109/ACCESS.2022.3145370

**Description**

CROSS-REFERENCE TO RELATED APPLICATIONS AND PRIORITY

The present application claims priority to Indian application no. 202421018311, filed on 13 March 2024.

TECHNICAL FIELD

The disclosure herein generally relates to microwave image processing, and, more particularly, to method and system for microwave imaging with multiple-input and multiple-output synthetic aperture radar (MIMO-SAR) using compressed multi-coset range migration technique.

BACKGROUND

Near-field microwave imaging is increasingly recognized as a viable alternative to existing imaging modalities such as X-ray. This recognition is due to its ability to penetrate range of materials, compact design, diminished health risks and cost effectiveness. Consequently, the near-field microwave imaging finds widespread application in various domains including concealed object detection, object/human tracking or identification, medical imaging, inspection of packed goods, through wall imaging, human robot interactions and/or the like. High resolution imaging is a key necessity in many of these applications. To fulfill this necessity, a Synthetic Aperture Radar (SAR) technique is typically employed which helps in improving the image resolution. Conventionally, a Single-Input and Single-Output (SISO) with the SAR (SISO-SAR) configuration is used where a single radar transmit-receive antenna pair is moved along a trajectory to synthetically increase the aperture. While SISO-SAR offers high resolution, but due to significant acquisition time, its practical deployment is restricted. On the other hand, millimeter-wave (mm-wave) MIMO radars are gaining popularity due to their compact designs and larger array dimensions. The integration of these MIMO radars with SAR motion (MIMO-SAR) has proven effective in significantly reducing the SAR acquisition time.

Typically, SAR reconstruction algorithms such as Back Projection Algorithm (BPA) and Range Migration (RMA) are employed on the collected measurements to reconstruct the SAR image of a scene. BPA is well known to be computationally intensive and hence is often not preferred in practice. In contrast, RMA relies on Fourier transform (FT) and utilizes Fast Fourier Transform (FFT) for efficient reconstruction. While RMA is computationally efficient, it requires uniform placement of array elements in MIMO radar, along with a consistent SAR trajectory. Further, in numerous application scenarios, there is a requirement to decrease the SAR measurements concurrently with the acquisition time, leading to a compressed scanning scenario. This makes it unsuitable for classical RMA.

There exists a compressed sensing (CS) paradigm-based approach, but it is computationally intensive. This is because the existing CS paradigm-based approach relies on Single Measurement Vector-compressed sensing (SMV-CS) based reconstruction, which involves operating on large dimensional measurement matrices. Further, a Non-Uniform FFT based RMA (NUFFT-RMA) has been used for image reconstruction, but this shows noticeable artifacts resulting in degraded SAR image reconstruction. Recently, a Multi-Coset sampling framework known as MC-RMA, is used that relaxes uniform array requirement of classical RMA. This framework demonstrates superior performance compared to NUFFT-RMA but does not address the compressed scanning scenario.

Documents reflecting background art useful to understand the invention include:

Gigie, Andrew, et al. "MC-RMA: Multi-coset range migration algorithm for near-field MIMO-SAR imaging."
Zhang, Kai, et al. "Beyond a gaussian denoiser: Residual learning of deep CNN for image denoising."
CN 107 390 215, "A kind of high speed super-resolution MIMO array imaging method." Hu, Shaoqing, et al. "Multistatic MIMO sparse imaging based on FFT and low-rank matrix recovery techniques."
Yanik, Muhammet Emin, and Murat Torlak. "Near-field MIMO-SAR millimeter-wave imaging with sparsely sampled aperture data."
Yanik, Muhammet Emin, and Murat Torlak. "Near-field MIMO-SAR millimeter-wave imaging with sparsely sampled aperture data."

SUMMARY

Embodiments of the present disclosure present technological improvements as solutions to one or more of the above-mentioned technical problems recognized by the inventors in conventional systems. For example, in one aspect, a processor implemented method is provided. The processor implemented method includes receiving, via one or more hardware processors, a plurality of back-scattered signals from a target scene as an input, wherein the plurality of back-scattered signals are received when at least one object at the target scene is scanned using a compressed scanning acquisition setup of a multiple input multiple output-synthetic aperture radar (MIMO-SAR) system to obtain a microwave image of the target scene, wherein the compressed scanning acquisition setup comprises an array of sensors that captures a plurality of measurements forming a plurality of intermittently skipped periodic blocks during scanning, and wherein the plurality of intermittently skipped periodic blocks are stitched to form a first aperture array; rearranging, via the one or more hardware processors, the plurality of back-scattered signals to generate a plurality of sub-arrays, wherein each of the plurality of sub-arrays is generated by combining a corresponding back-scattered signal received across each of a corresponding element of each period block from the plurality of intermittently skipped periodic blocks of the first aperture array; visualizing, via the one or more hardware processors, each of the plurality of sub-arrays as translated and decimated array of a second aperture array, wherein each sub-array element from a plurality of sub-array elements in each of the plurality of sub-arrays is uniformly spaced from each other; computing, via the one or more hardware processors, a Fourier transform (FT) of the plurality of sub-array elements by deploying a two-dimensional Fast Fourier transform (2D-FFT) to obtain a two-dimensional (2D) Fast Fourier transform (FFT) of the plurality of sub-array elements; vectorizing, via the one or more hardware processors, the 2D FFT computed for the plurality of sub-array elements to obtain one or more vectorized sub-array matrices, wherein the one or more vectorized sub-array matrices are stacked to form one or more stacked sub-array matrices, wherein the one or more stacked sub-array matrices represent a weighted superposition of a stacked sub-band spectrum of the 2D FFT of the second aperture array using a precomputed weight matrix; reconstructing, via the one or more hardware processors, the microwave image of the target scene using the one or more stacked sub-array matrices, wherein the microwave image is reconstructed by applying one or more block-sparsity constraints on the one or more stacked sub-array matrices; and performing, via the one or more hardware processors, denoising on the reconstructed microwave image using a denoising convolutional neural network to obtain a final enhanced microwave image of the target scene.

In another aspect, there is provided a system. The system includes a memory storing instructions; one or more communication interfaces; and one or more hardware processors coupled to the memory via the one or more communication interfaces, wherein the one or more hardware processors are configured by the instructions to: receive a plurality of back-scattered signals from a target scene as an input, wherein the plurality of back-scattered signals are received when at least one object at the target scene is scanned using a compressed scanning acquisition setup of a multiple input multiple output-synthetic aperture radar (MIMO-SAR) system to obtain a microwave image of the target scene, wherein the compressed scanning acquisition setup comprises an array of sensors that captures a plurality of measurements forming a plurality of intermittently skipped periodic blocks during scanning, and wherein the plurality of intermittently skipped periodic blocks are stitched to form a first aperture array; rearrange the plurality of back-scattered signals to generate a plurality of sub-arrays, wherein each of the plurality of sub-arrays is generated by combining a corresponding back-scattered signal received across each of a corresponding element of each period block from the plurality of intermittently skipped periodic blocks of the first aperture array; visualize each of the plurality of sub-arrays as translated and decimated array of a second aperture array, wherein each sub-array element from a plurality of sub-array elements in each of the plurality of sub-arrays is uniformly spaced from each other; compute a Fourier transform (FT) of the plurality of sub-array elements by deploying a two-dimensional Fast Fourier transform (2D-FFT) to obtain a two-dimensional (2D) Fast Fourier transform (FFT) of the plurality of sub-array elements; vectorize the 2D FFT computed for the plurality of sub-array elements to obtain one or more vectorized sub-array matrices, wherein the one or more vectorized sub-array matrices are stacked to form one or more stacked sub-array matrices, wherein the one or more stacked sub-array matrices represent a weighted superposition of a stacked sub-band spectrum of the 2D FFT of the second aperture array using a precomputed weight matrix; reconstruct the microwave image of the target scene using the one or more stacked sub-array matrices, wherein the microwave image is reconstructed by applying one or more block-sparsity constraints on the one or more stacked sub-array matrices; and perform denoising on the reconstructed microwave image using a denoising convolutional neural network to obtain a final enhanced microwave image of the target scene.

In yet another aspect, there are provided one or more non-transitory machine readable information storage mediums comprising one or more instructions which when executed by one or more hardware processors causes at least one of: receiving a plurality of back-scattered signals from a target scene as an input, wherein the plurality of back-scattered signals are received when at least one object at the target scene is scanned using a compressed scanning acquisition setup of a multiple input multiple output-synthetic aperture radar (MIMO-SAR) system to obtain a microwave image of the target scene, wherein the compressed scanning acquisition setup comprises an array of sensors that captures a plurality of measurements forming a plurality of intermittently skipped periodic blocks during scanning, and wherein the plurality of intermittently skipped periodic blocks are stitched to form a first aperture array; rearranging the plurality of back-scattered signals to generate a plurality of sub-arrays, wherein each of the plurality of sub-arrays is generated by combining a corresponding back-scattered signal received across each of a corresponding element of each period block from the plurality of intermittently skipped periodic blocks of the first aperture array; visualizing, each of the plurality of sub-arrays as translated and decimated array of a second aperture array, wherein each sub-array element from a plurality of sub-array elements in each of the plurality of sub-arrays is uniformly spaced from each other; computing a Fourier transform (FT) of the plurality of sub-array elements by deploying a two-dimensional Fast Fourier transform (2D-FFT) to obtain a two-dimensional (2D) Fast Fourier transform (FFT) of the plurality of sub-array elements; vectorizing the 2D FFT computed for the plurality of sub-array elements to obtain one or more vectorized sub-array matrices, wherein the one or more vectorized sub-array matrices are stacked to form one or more stacked sub-array matrices, wherein the one or more stacked sub-array matrices represent a weighted superposition of a stacked sub-band spectrum of the 2D FFT of the second aperture array using a precomputed weight matrix; reconstructing the microwave image of the target scene using the one or more stacked sub-array matrices, wherein the microwave image is reconstructed by applying one or more block-sparsity constraints on the one or more stacked sub-array matrices; and performing denoising on the reconstructed microwave image using a denoising convolutional neural network to obtain a final enhanced microwave image of the target scene.

In accordance with an embodiment of the present disclosure, the first aperture array is a non-uniform entire aperture array having skipped data acquisition.

In accordance with an embodiment of the present disclosure, the second aperture array is a uniform entire aperture array without skipped data acquisition.

In accordance with an embodiment of the present disclosure, the precomputed weight matrix is obtained using a phase relationship of one or more spatial array elements across the stacked sub-band spectrum of the 2D FFT of the second aperture array.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for microwave imaging with multiple-input and multiple-output synthetic aperture radar (MIMO-SAR) using compressed multi-coset range migration technique, according to some embodiments of the present disclosure.

FIG. 2 is an exemplary block diagram of the system of FIG. 1 implementing the MIMO-SAR for microwave imaging using compressed multi-coset range migration technique, according to some embodiments of the present disclosure.

FIG. 3 is an exemplary flow diagram illustrating method for microwave imaging with multiple-input and multiple-output synthetic aperture radar (MIMO-SAR) using compressed multi-coset range migration technique, according to some embodiments of the present disclosure.

FIG. 4 depicts a diagram illustrating structure of the one or more stacked sub-array matrix and the FT of the plurality of backscattered signal provided for a real test instance, according to some embodiments of the present disclosure.

FIG. 5 depicts exemplary graphical representation illustrating visual qualitative experimental results obtained by implementing prior art 1( NUFFT-RMA), CMC-RMA, and the method of the present disclosure respectively for five instances from a test set according to an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need for an approach to address the problem of compressed scanning in SAR acquisitions for microwave imaging. Embodiments of the present disclosure provide a method and system for microwave imaging with multiple-input and multiple-output synthetic aperture radar (MIMO-SAR) using compressed multi-coset range migration technique. The microwave imaging corresponds but is not limited to (a) a near-field imaging, and (b) a far-field imaging. The approach of the present disclosure leverages compressed scanning to minimize the SAR acquisition time by intermittently skipping periodic blocks during SAR motion. Multiple smaller sub-arrays are formed by combining individual MIMO array elements across these scanned blocks. The sub-arrays are uniformly spaced due to the periodic skipping during SAR motion. The sub-array elements are further visualized as decimated and translated version of a uniform entire aperture array without skipped data acquisition, resembling a multi-coset sampling framework. Based on this visualization, a Fourier Transform (FT) of the sub-arrays and the FT of entire measurements are computed based on a Multiple Measurement Vector based compressed scanning (MMV-CS) recovery framework. The Fourier transform (FT) of entire measurements exhibits block-wise sparsity. Consequently, block sparsity constraints are incorporated into an optimization framework of the present disclosure to estimate the FT of the entire measurements. The estimated FT is then used to reconstruct microwave image of a scanned scene. A denoising step is performed based on Denoising Convolutional Neural Networks (DnCNNs) which are appropriately trained using collected data and are subsequently applied to further denoise and enhance the reconstructed SAR image, resulting in a final SAR image.

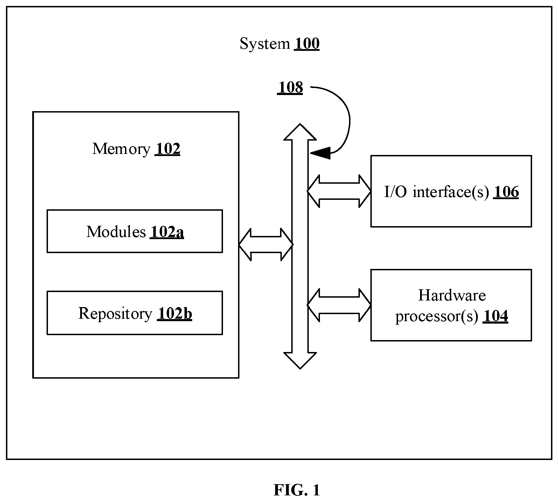

Referring now to the drawings, and more particularly to FIGS. 1 through 5, where similar reference characters denote corresponding features consistently throughout the figures, there are shown preferred embodiments and these embodiments are described in the context of the following exemplary system and/or method.

FIG. 1 illustrates a system 100 for microwave imaging with multiple-input and multiple-output synthetic aperture radar (MIMO-SAR) using compressed multi-coset range migration technique, according to an embodiment of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism. The system 100 is further connected to a radar and antenna unit (Not shown in figure) via the I/O interface(s) 106.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

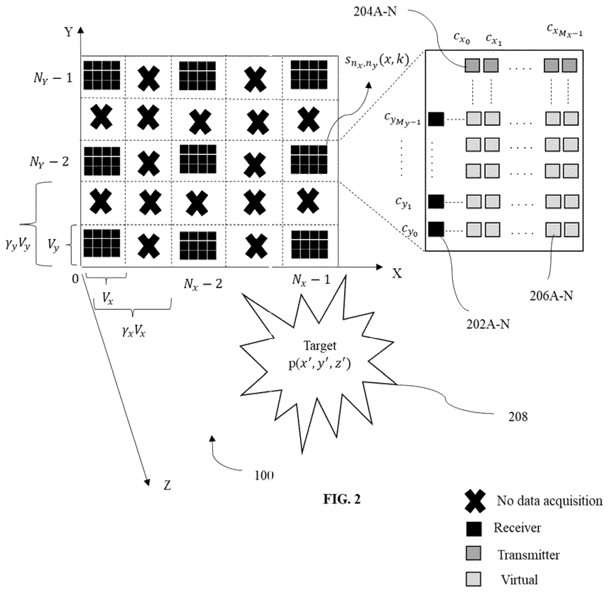

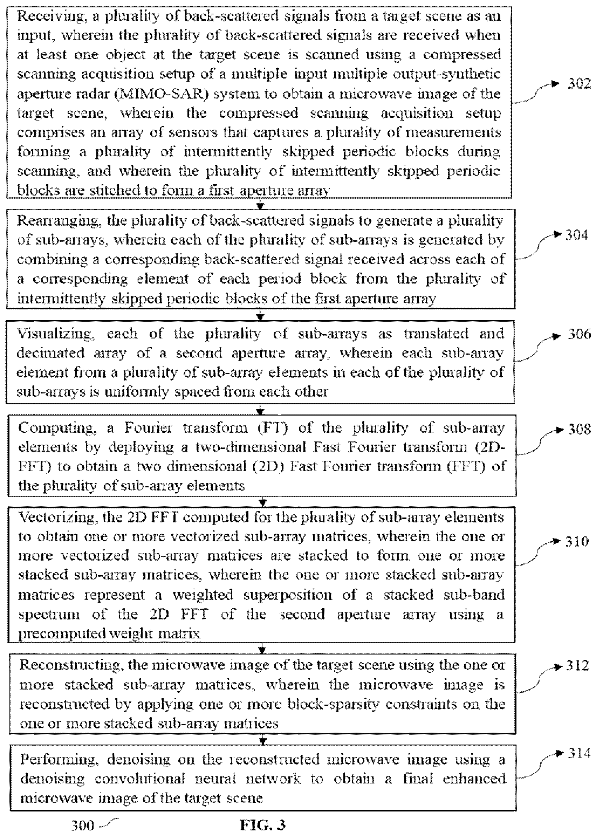

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database. Functions of the components of the system 100 are now explained with reference to architecture as depicted in steps in flow diagrams in FIG. 2 and FIG. 3.

FIG. 2 is an exemplary block diagram of the system 100 of FIG. 1 implementing the MIMO-SAR for the microwave imaging, according to an embodiment of the present disclosure. The system 100 includes the multiple-input and multiple-output (MIMO) radar and a synthetic aperture radar (SAR) i.e., the MIMO-SAR. The MIMO radar includes one or more receivers 202A-N, one or more transmitters 204A-N, one or more virtual elements 206A-N, and a target scene 208. The MIMO-SAR with a linear array of receivers 202A-N and the one or more transmitters 204A-N are placed orthogonally which provides a rectangular array of $M_x \times M_y$ virtual array elements 206A-N. In an embodiment, the MIMO radar corresponds to a two-dimensional (2D) MIMO radar. The position of these virtual array elements is denoted by $C = C_x \times C_y$, where ' $\times$ '

denotes cartesian product of two sets and $C_x = \left\{ c_{x_0}, c_{x_1}, \ldots c_{x_{M_x-1}} \right\}$, and $C_y = \left\{ c_{y_0}, c_{y_1}, \ldots c_{y_{M_y-1}} \right\}$, represent position of transmitter and receiver elements respectively.

FIG. 3, with reference to FIGS. 1 and 2, is an exemplary flow diagram illustrating method for microwave imaging with multiple-input and multiple-output synthetic aperture radar (MIMO-SAR) using compressed multi-coset range migration technique, according to an embodiment of the present disclosure. Referring to FIG. 3, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, and one or more examples. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 302 of the present disclosure, the one or more hardware processors 104 are configured to receive a plurality of back-scattered signals from a target scene as an input. The plurality of back-scattered signals are received when at least one object at the target scene is scanned using a compressed scanning acquisition setup of a multiple input multiple output-synthetic aperture radar (MIMO-SAR) system to obtain a microwave image of the target scene. The received plurality of back-scattered signals for an array element located at $x = (x, y)$ can be expressed as $s(x, k)$:

$$s(\boldsymbol{x}, k) = \iiint \rho(x', y', z') e^{-j2kR} dx dy dz \quad (1)$$

where $\rho(x', y', z')$ denote a three-dimensional (3D) target reflectivity function of the target scene 208, $R$ is distance between the array element and one or more points of the target scene 208 in the three-dimension (3D), and $k$ denotes a wave number. Here, the spherical waves are assumed as superposition of planar waves and approximate $e^{-j2kR}$ as:

$$e^{-j2kR} \simeq \iint e^{-j\left(k_x(x'-x) + k_y(y'-y) + k_z(Z_0-z)\right)} dk_x dk_y \quad (2)$$

Here, $k_x$, $k_y$, and $k_z$ represent the wave numbers along the $x$, $y$, and $z$ axes, respectively and $Z_0$ signifies a distance along the $z$ dimension between scanning and target planes.

The compressed scanning acquisition setup comprises an array of sensors that captures a plurality of measurements forming a plurality of intermittently skipped periodic blocks during scanning. The plurality of intermittently skipped periodic blocks are stitched to form a first aperture array. As shown in FIG. 2, the first aperture array is a non-uniform entire aperture array having skipped data acquisition. For compressed scanning, intermittent periodic skips are incorporated in contrast to uniform SAR motion where the MIMO radar moves in uniform blocks. The compressed scanning acquisition setup not only expedites SAR acquisition time but also helps to reduce computational complexity owing to lesser data and is easily realizable in practice. The plurality of measurements denoted by $s(x, k)$ captured by the array of sensors are expressed as follows:

$$s_{n_x, n_y}(\boldsymbol{x}, k) = s\left(n_x \gamma_x V_x + C_x, n_y \gamma_y V_y + C_y, k\right) (3)$$

Here, $V_x = cx_{M_x-1} + c_{x_1}$, $V_y = c_{yM_y-1} + c_{y_1}$, $\gamma_x > 1$, $\gamma_y > 1$ denotes the skip factors along $x$ and $y$ dimensions respectively. The parameters $N_x$ and $N_y$ denote the number of periodic block scans along the $x$ and $y$ axis respectively, and $0 \leq n_x \leq N_x - 1$, $0 \leq n_y \leq N_y - 1$.

Further, at step 304 of the present disclosure, the one or more hardware processors 104 are configured to rearrange the plurality of back-scattered signals to generate a plurality of sub-arrays. Each of the plurality of sub-arrays is generated by combining a corresponding back-scattered signal received across each of a corresponding element of each period block from the plurality of intermittently skipped periodic blocks of the first aperture array. This rearrangement for generating the plurality of sub-arrays is referred as a multi-coset based formulation where multiple smaller sub-arrays represented by $s_{l_x,l_y}(\boldsymbol{x}, k)$ corresponding to $l_x^{th}$, $l_x^{th}$ elements of all the $s_{n_x,n_y}(\boldsymbol{x},k)$ blocks is provided as:

$$s_{l_x,l_y}(\boldsymbol{x}, k) = s(\boldsymbol{Dx} + c_{l_x,l_y}, k) \ (4)$$

Here $0 \le l_x \le M_x - 1, 0 \le l_y \le M_y - 1$, $c_{l_x,l_y} = \left[c_{x_{l_x}}, c_{y_{l_y}}\right]^T$ and the factor $D = diag\{D_x, D_y\}$, where $D_x = \gamma_x M_x$ and $D_y = \gamma_y M_y$. It is observed that the array elements in $s_{n_x,n_y}(\boldsymbol{x}, k)$ are non-uniform, but the sensor elements in the plurality of sub-arrays $s_{l_x,l_y}(\boldsymbol{x}, k)$ for any $l_x, l_y$ are uniformly spaced due to 2-D periodic skipping.

At step 306 of the present disclosure, the one or more hardware processors 104 are configured to visualize each of the plurality of sub-arrays as translated and decimated array of a second aperture array. The second aperture array is a uniform entire aperture array without skipped data acquisition. Here, each sub-array element from a plurality of sub-array elements in each if the plurality of sub-arrays is uniformly spaced from each other. This means that the sub-array elements provided in equation (4) can be visualized as decimated and translated arrays of the uniform entire aperture array without skipped data acquisition as shown in FIG. 2, and closely resembles a multi-coset sampling structure.

Further, at step 308 of the present disclosure, the one or more hardware processors 104 are configured to compute a Fourier transform (FT) of the plurality of sub-array elements by deploying a two-dimensional Fast Fourier transform (2D-FFT) to obtain a two-dimensional (2D) Fast Fourier transform (FFT) of the plurality of sub-array elements. Further, at step 310 of the present disclosure, the one or more hardware processors 104 are configured to vectorize the 2D FFT computed for the plurality of sub-array elements to obtain one or more vectorized sub-array matrices. The one or more vectorized sub-array matrices are stacked to form one or more stacked sub-array matrices. The one or more stacked sub-array matrices represent a weighted superposition of stacked sub band spectrum of the 2D FFT of the second aperture array using a precomputed weight matrix.

In an embodiment, the steps 308 and 310 are better understood by way of the following description provided as exemplary explanation.

In a traditional Range Migration Algorithm (RMA) which is used to reconstruct the 3D target reflectivity function $\rho(x', y', z')$ from the acquired s $(x, k)$. By substituting (2) into (1) and applying 2-D FT, the FT of the plurality of backscattered signal are expressed as:

$$S(\boldsymbol{k}_x, k) = P(\boldsymbol{k}_x, k_z)e^{jk_z Z_0} \ (5)$$

Here, $\boldsymbol{k}_x = (k_x, k_y)$ and should satisfy below expression:

$$k_z = \sqrt{4k^2 - k_x^2 - k_y^2}, k_x^2 + k_y^2 \le 4k^2 \ (6)$$

A final 2-D target reflectivity function $\rho(x', y')$ at plane $z' = Z_0$ can be obtained from equation (5) using the following expression:

$$\rho(x', y') = IFT_{2D}^{(k_x, k_y)} \left[e^{-jk_z Z_0} S(\boldsymbol{k}_x, k)\right] \ (7)$$

Here, $IFT_{2D}$ represents the two-dimensional inverse FT. In order to estimate, $\rho(x', y')$ from equation (7), the FT represented as $S(\boldsymbol{k}_x, k)$ is necessary. Traditionally, $S(\boldsymbol{k}_x, k)$ is computed from s $(x, k)$ using a standard 2D FFT, where the MIMO radar is scanned uniformly along $x$. This results in an increase in both SAR measurements as well as the scan duration. It is observed that $S(\boldsymbol{k}_x, k)$ cannot be directly estimated from equation (3) using the standard 2D-FFT.

The 2-D FFT is applied on $s_{l_x,l_y}(\boldsymbol{x}, k)$ to compute an aliased FT $s_{l_x,l_y}(\boldsymbol{k}_x, k)$ which is expressed as:

$$S_{l_x,l_y}(\boldsymbol{k}_x, k) = \frac{1}{D_x D_y} e^{-j2\pi c_{l_x,l_y} k_x} \sum_{q=0}^{|\Lambda|} e^{j2\pi c_{l_x,l_y} D^{-1}\lambda_q} S\left(\boldsymbol{k}_x + D^{-1}\lambda_q, k\right) \ (8)$$

where $\lambda_q$ denotes $q^{th}$ element of a set $\Lambda = \{0,1,...,D, -1\} \times \{0,1,...,D_y - 1\}$. The $S(\boldsymbol{k}_x, k)$ denotes the 2D FFT of the second aperture array. The 2D FFT of the one or more sub-array elements is vectorized to obtain one or more vectorized sub-array

matrices. $(k_x + D^{-1}\lambda_q, k)$ in equation (8) denotes the one or more vectorized sub-array matrices (also referred as non-overlapping sub-band patches) of $S(k_x, k)$ of dimension $N_x \times N_y$ beginning from the position $diag\{N_x, N_y\}\lambda_q$. The one or more vectorized sub-array matrices are stacked to form one or more stacked sub-array matrices which are represented as:

$$S_{sb}(k_x, k) \triangleq \left[(S(k_x + D^{-1}\lambda_0, k), S(k_x + D^{-1}\lambda_1, k), \ldots\ldots S(k_x + D^{-1}\lambda_{|\Lambda|}, k)\right]^T \quad (9)$$

$$S_l(k_x, k) \triangleq \left[S_{0,0}(k_x, k), S_{0,1}(k_x, k), \ldots\ldots S_{M_x-1, M_y-1}(k_x, k)\right]^T$$

$$\Delta(k_x) \triangleq diag\{e^{-j2\pi c_{0,0}k_x}, e^{-j2\pi c_{0,1}k_x}, \ldots\ldots, e^{-j2\pi c_{M_x-1, M_y-1}k_x}\} \quad (10)$$

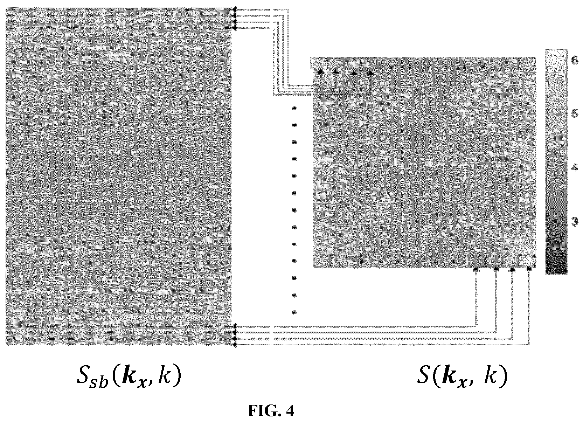

FIG. 4 depicts a diagram illustrating structure of the one or more stacked sub-array matrices $S_{sb}(k_x, k)$ and the FT of the plurality of backscattered signal $S(k_x, k)$ provided for a real test instance, according to some embodiments of the present disclosure. The one or more stacked sub array matrices are relatively equivalent to a weighted superposition of a stacked sub band spectrum of the 2D FFT of the second aperture array using a precomputed weight matrix, and can be expressed as:

$$S_l(k_x, k) = \frac{1}{D_x D_y}\Delta(k_x) A S_{sb}(k_x, k) \quad (11)$$

$A$ is a matrix of size $M_x M_y \times D_x D_y$ and represents the precomputed weight matrix. Any $(l, q)$ element of $A$ is given as $[A]_{l,q} = e^{j2\pi c_{l_x,l_y}^T D^{-1}\lambda_q}$. The precomputed weight matrix is using a phase relationship of one or more spatial array elements across the stacked sub-band spectrum of the 2D FFT of the second aperture array.

Referring to FIG. 3, at step 312 of the present disclosure, the one or more hardware processors 104 are configured to reconstruct a microwave image of the target scene using the one or more stacked sub-array matrices. The microwave image is reconstructed by applying one or more block-sparsity constraints on the one or more stacked sub-array matrices. It is observed from equation (11) that $S_{sb}$ is unknown, while $S_l$ is known and the matrices $\Delta(k_x)$, and $A$ are pre-computed. The equation (11) is simplified and expressed as:

$$y = A S_{sb} \quad (12)$$

where $y = D_x D_y(\Delta(k_x))^{-1}S_l(k_x, k)$ and $S_{sb} = S_{sb}(k_x, k)$.

It is observed from FIG. 4 that $S_{sb}$ exhibits row-wise sparsity. This means that only few rows of $S_{sb}$ contains significant energy. Hence inorder to recover $S_{sb}$, the one or more block-sparsity constraints are applied in equation (12) and are expressed as:

$$S_{sb} = arg \min_{S_{sb}}\|y - A S_{sb}\|_F^2 + \beta\|S_{sb}\|_{2,1} \quad (13)$$

Here, $\ell_{2,1}$ norm is defined as $\|S_{sb}\|_{2,1} = \sum_{q=1}^{D_x D_y}\sqrt{\sum_{p=1}^{N_x N_y}(S_{sb})_{p,q}}$ and $(S_{sb})_{p,q}$ $(p, q)^{th}$ element of the matrix $S_{sb}$. It is observed that equation (13) resembles the MMV-CS reconstruction framework. To obtain $S_{sb}$ from equation (13), any existing MMV-CS recovery algorithm can be used. However, in the present disclosure, a proximal gradient approach which involves the following alternative gradient descent and soft thresholding iterations on each of the $q$ blocks are used. The closed form update for the $(t + 1)^{th}$ iterative is shown below in equations (14) and (15):

$$(S_{sb})_q^{(t+1)} = (S_{sb})_q^{(t)} + \alpha A^T(y - A S_{sb}^{(t)}) \quad (14)$$

$$(S_{sb})_q^{(t+1)} = (S_{sb})_q^{(t+1)}(1 - \beta/\|S_{sb}\|_2)_+ \quad (15)$$

Here $(.)_+$ indicates $\max(., 0)$, $\alpha$ is a learning rate and $\beta$ is a thresholding hyperparameter that is used to control degree of sparsity. After tuning, it is observed that the above closed-form updates converge within 5 iterations. Additionally, the unrolling of these iterative steps can be employed which results in greatly reducing the reconstruction duration. After obtaining $S_{sb}(k_x, k)$, the non-overlapping sub-bands can be appropriately rearranged as shown in FIG. 4 to obtain $S(\mathbf{k_x}, k)$. Further, $S(\mathbf{k_x}, k)$ is inserted into a classical RMA algorithm to obtain the two-dimensional target reflectivity function $\rho(x', y')$. The dimension of the measurement matrix $A$ in the present disclosure is $M_x M_y \times D_x D_y$ and the gradient descent step. A significant reduction in the matrix dimension of $A$ is observed which leads to a significant computational improvement.

Further, at step 312 of the present disclosure, the one or more hardware processors 104 are configured to perform denoising on the reconstructed microwave image using a denoising convolutional neural network to obtain a final enhanced microwave image of the target scene. The reconstructed microwave image is fed to the denoising convolutional neural network (DnCNN) for denoising. The denoising convolutional neural network is known to be capable of learning denoising filters from images while preserving image details. A (typical) DnCNN comprises a network architecture and a model learning from data. In designing the network architecture, a structure that comprise of multiple convolutional and batch normalization layers is adopted making it suitable for SAR image denoising. For the model learning part, a residual learning strategy is employed wherein the network learns to predict the noise given a noisy SAR image. Let the reconstructed microwave image $\rho(x', y')$ be denoted as $\rho$ for simplicity. The ground truth image is denoted as $s$ is obtained using complete scan $s(x, k)$ which means $\gamma_x = 1$, $\gamma_y = 1$; without any skipping between the MIMO-SAR acquisitions. The task here is to recover ground truth ($s$) for a given image. Here $\{(\rho_i, s_i)\}_{i=1}^{N}$ represents N {compressed sensing multi coset range migration algorithm (CMC-RMA), ground truth} training image pairs. It is assumed that CMC-RMA image follows a degradation model, $\rho_i = s_i + v_i$, where, the component $v_i$ represents artifacts created in CMC-RMA image reconstruction. In DnCNN, a residual mapping $E(\rho_i; \theta) \approx v_i$ is trained to be learnt to obtain a denoised image $s_i = \rho_i - E(\rho_i; \theta)$. The mean squared error (MSE) between predicted residual images (E) and actual artifacts in CMC-RMA images ($v_i$) is employed as a loss function to optimize the trainable parameters $\theta$ as shown below:

$$l(\theta) = \frac{1}{2N} \sum_{i=1}^{N} \| E(\rho_i; \theta) - (\rho_i - s_i) \|_F^2 \ (16)$$

After suitably training the DnCNN, the trained network is deployed to denoise the SAR image generated using CMC-RMA to obtain a final denoised SAR image which is the final enhanced microwave image of the target scene.

**Experimental results:**

In an embodiment, experimental results have been obtained to validate effectiveness of the method of the present disclosure in comparison to state-of-the-art techniques. The plurality of measurements was obtained using an imagevk-74 Radar which is a Stepped Frequency Continuous Wave (SFCW) MIMO radar, by mounting it on a 2-D mechanical scanner. The targets were placed within a box and kept at a distance of $Z_0 = 20$ *cm*. The MIMO radar operated within a frequency range of (62 - 69) GHz and collected the frequency response for 150 points. The MIMO array with $M_x = 20$ transmit antennas and $M_y = 20$ receive antennas were positioned orthogonally to form a rectangular virtual array with dimensions $M_x \times M_y$. Interelement distance between array elements is 2 mm, thus $V_x = 40$ *mm*, $V_y = 40$ *mm*. Further, the compressed scanning has been obtained by skipping periodic intermittent blocks with $\gamma_x = 1.25$, $\gamma_y = 1.25$, $N_x = 4$ and $N_y = 4$. With this experimental configuration, the dimensions of $s_{n_x, n_y}(x, k)$, $s_{l_x, l_y}(x, k)$, and $s(x, k)$ are $20 \times 20$, $4 \times 4$, and $100 \times 100$ respectively, for a given $k$.

In the present disclosure, data has been collected for 70 instances by placing commonly-used objects such as knife, cutting plier, metal plates, coins, mobile phones, coke cans, and/or the like. Hyperparameters $\alpha = 1e$ - 3 and $\beta = 5e3$ of the method of the present disclosure were tuned using grid search. Further 60 images were used for training the DnCNN network and the remaining were used for evaluating the reconstruction performance. Standard augmentation techniques such as rotation, circular shift was applied on the training data and 128 random patches were extracted from each image. Hence in total around 10,000 patches of size $50 \times 50$ were used for training the DnCNN network for 100 epochs. An Adam optimizer is used with weight decay of 0.0001, a momentum of 0.9 and a mini-batch size of 64. The network depth is set to 8 and MSE loss (i.e., (16)) is adopted to learn residual mapping.

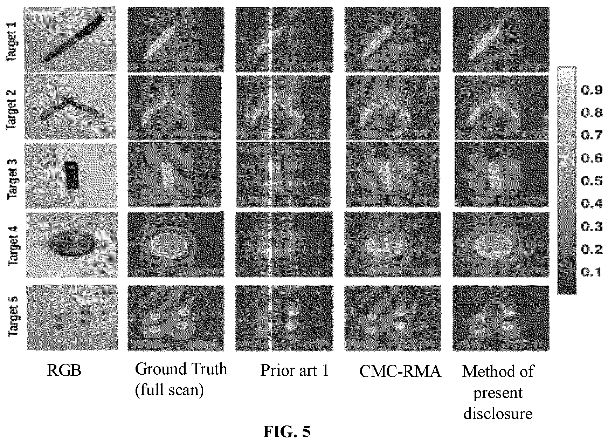

FIG. 5 depicts exemplary graphical representation illustrating visual qualitative experimental results obtained by implementing prior art 1( NUFFT-RMA), CMC-RMA, and the method of the present disclosure respectively for five instances from a test set according to an embodiment of the present disclosure. As shown in FIG. 5, the ground truth image which is obtained using complete scan (i.e., without any skipping between the MIMO-SAR acquisitions) and state of the art methods employ the compressed scanning framework It is also shown in FIG. 5 that the SAR image obtained using a prior art 1 (i.e., NUFFT-RMA) shows artifacts and results in poorer reconstruction. These artifacts are effectively mitigated using the compressed sensing multi coset range migration algorithm (i.e., CMC-RMA) reconstruction as shown in FIG. 5, leading to noticeable improvement in resulting image. Subsequently, the trained DnCNN further denoises the image obtained from CMC-RMA providing a superior reconstruction. A quantitative comparison between the state-of-the-art methods and the method of present disclosure is provided in Table 1.

Table 1

|  | Prior art 1 | CMC-RMA | Method of the present disclosure (CMC-RMA+ DnCNN) |
|---|---|---|---|
| PSNR (dB) | 18.94 | 20.13 | **23.44** |
| SSIM | 0.52 | 0.54 | **0.62** |

In Table 1, averaged peak signal-to-noise ratio (PSNR) and structural similarity index measure (SSIM) values across all test cases are reported. It is observed that the method of present disclosure combining CMC-RMA and DnCNN exhibits an improvement of close to 4dB and 0.1 in PSNR and SSIM respectively compared to the prior art 1 (i.e., NUFFT-RMA).

There is a need to address the problem of compressed scanning in SAR acquisitions for microwave imaging. Embodiments of the present disclosure provide method and system for microwave imaging with multiple-input and multiple-output (MIMO) synthetic aperture radar (SAR). The present disclosure reduces the SAR acquisition time by compressed scanning, where a compressed scanning acquisition setup captures radar measurements by intermittently skipping blocks during SAR acquisition. Further, reconstruction of a microwave image of a target scene is performed using 2D Fourier Transform (FT) of the radar measurements based on a multi-coset framework. The multi-coset framework makes use of intermittent scanning and formulates a compressed sensing-based framework by leveraging block-sparsity constraints. Subsequently, a denoising convolutional neural network (DnCNN) is used to enhance and denoise the reconstructed microwave image to obtain a high-resolution image of the target scene. Both the quantitative and qualitative results on real experimental data for the present disclosure demonstrate substantial improvement over existing state-of-art approaches. The method of the present disclosure not only expedites the scanning but also offers computational and performance advantages over conventional methods.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200), comprising

   receiving (302), via one or more hardware processors, a plurality of back-scattered signals from a target scene as an input, wherein the plurality of back-scattered signals are received when at least one object at the target scene is scanned using a compressed scanning acquisition setup of a multiple input multiple output-synthetic aperture radar (MIMO-SAR) system to obtain a microwave image of the target scene, wherein the compressed scanning acquisition setup comprises an array of sensors that captures a plurality of measurements forming a plurality of intermittently skipped periodic blocks during scanning, and wherein the plurality of intermittently skipped periodic blocks are stitched to form a first aperture array;
   rearranging (304), via the one or more hardware processors, the plurality of back-scattered signals to generate a plurality of sub-arrays, wherein each of the plurality of sub-arrays is generated by combining a corresponding back-scattered signal received across each of a corresponding element of each period block from the plurality of intermittently skipped periodic blocks of the first aperture array;
   visualizing (306), via the one or more hardware processors, each of the plurality of sub-arrays as translated and decimated array of a second aperture array, wherein each sub-array element from a plurality of sub-array elements in each of the plurality of sub-arrays is uniformly spaced from each other;
   computing (308), via the one or more hardware processors, a Fourier transform (FT) of the plurality of sub-array elements by deploying a two-dimensional Fast Fourier transform (2D-FFT) to obtain a two-dimensional (2D) Fast Fourier transform (FFT) of the plurality of sub-array elements;
   vectorizing (310), via the one or more hardware processors, the 2D FFT computed for the plurality of sub-array elements to obtain one or more vectorized sub-array matrices, wherein the one or more vectorized sub-array matrices are stacked to form one or more stacked sub-array matrices, wherein the one or more stacked sub-array matrices represent a weighted superposition of a stacked sub-band spectrum of the 2D FFT of the second aperture array using a precomputed weight matrix;
   reconstructing (312), via the one or more hardware processors, the microwave image of the target scene using the one or more stacked sub-array matrices, wherein the microwave image is reconstructed by applying one or more block-sparsity constraints on the one or more stacked sub-array matrices; and
   performing (314), via the one or more hardware processors, denoising on the reconstructed microwave image using a denoising convolutional neural network to obtain a final enhanced microwave image of the target scene.

2. The processor implemented method (300) as claimed in claim 1, wherein the first aperture array is a non-uniform entire aperture array having skipped data acquisition.

3. The processor implemented method (300) as claimed in claim 1, wherein the second aperture array is a uniform entire aperture array without skipped data acquisition.

4. The processor implemented method (300) as claimed in claim 1, wherein the precomputed weight matrix is obtained using a phase relationship of one or more spatial array elements across the stacked sub-band spectrum of the 2D FFT of the second aperture array.

5. A system (100), comprising

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive a plurality of back-scattered signals from a target scene as an input, wherein the plurality of back-scattered signals are received when at least one object at the target scene is scanned using a compressed scanning acquisition setup of a multiple input multiple output-synthetic aperture radar (MIMO-SAR) system to obtain a microwave image of the target scene, wherein the compressed scanning acquisition setup comprises an array of sensors that captures a plurality of measurements forming a plurality of intermittently skipped periodic blocks during scanning, and wherein the plurality of intermittently skipped periodic blocks are stitched to form a first aperture array;

rearrange the plurality of back-scattered signals to generate a plurality of sub-arrays, wherein each of the plurality of sub-arrays is generated by combining a corresponding back-scattered signal received across each of a corresponding element of each period block from the plurality of intermittently skipped periodic blocks of the first aperture array;

visualize each of the plurality of sub-arrays as translated and decimated array of a second aperture array, wherein each sub-array element from a plurality of sub-array elements in each of the plurality of sub-arrays is uniformly spaced from each other;

compute a Fourier transform (FT) of the plurality of sub-array elements by deploying a two-dimensional Fast Fourier transform (2D-FFT) to obtain a two-dimensional (2D) Fast Fourier transform (FFT) of the plurality of sub-array elements;

vectorize the 2D FFT computed for the plurality of sub-array elements to obtain one or more vectorized sub-array matrices, wherein the one or more vectorized sub-array matrices are stacked to form one or more stacked sub-array matrices, wherein the one or more stacked sub-array matrices represent a weighted superposition of a stacked sub-band spectrum of the 2D FFT of the second aperture array using a precomputed weight matrix;

reconstruct the microwave image of the target scene using the one or more stacked sub-array matrices, wherein the microwave image is reconstructed by applying one or more block-sparsity constraints on the one or more stacked sub-array matrices; and

perform denoising on the reconstructed microwave image using a denoising convolutional neural network to obtain a final enhanced microwave image of the target scene.

6. The system (100) as claimed in claim 5, wherein the first aperture array is a non-uniform entire aperture array having skipped data acquisition.

7. The system (100) as claimed in claim 5, wherein the second aperture array is a uniform entire aperture array without skipped data acquisition.

8. The system (100) as claimed in claim 5, wherein the precomputed weight matrix is obtained using a phase relationship of one or more spatial array elements across the stacked sub-band spectrum of the 2D FFT of the second aperture array.

9. One or more non-transitory machine-readable information storage mediums comprising one or more instructions which when executed by one or more hardware processors cause:receiving a plurality of back-scattered signals from a target scene as an input, wherein the plurality of back-scattered signals are received when at least one object at the target scene is scanned using a compressed scanning acquisition setup of a multiple input multiple output-synthetic aperture radar (MIMO-SAR) system to obtain a microwave image of the target scene, wherein the compressed scanning acquisition setup comprises an array of sensors that captures a plurality of measurements forming a plurality of intermittently skipped periodic blocks during scanning, and wherein the plurality of intermittently skipped periodic blocks are stitched to form a first aperture array;

rearranging the plurality of back-scattered signals to generate a plurality of sub-arrays, wherein each of the plurality of sub-arrays is generated by combining a corresponding back-scattered signal received across each of a corresponding element of each period block from the plurality of intermittently skipped periodic blocks of the first aperture array;

visualizing each of the plurality of sub-arrays as translated and decimated array of a second aperture array, wherein each sub-array element from a plurality of sub-array elements in each of the plurality of sub-arrays is uniformly spaced from each other;

computing a Fourier transform (FT) of the plurality of sub-array elements by deploying a two-dimensional Fast Fourier transform (2D-FFT) to obtain a two-dimensional (2D) Fast Fourier transform (FFT) of the plurality of sub-array elements;

vectorizing the 2D FFT computed for the plurality of sub-array elements to obtain one or more vectorized sub-array matrices, wherein the one or more vectorized sub-array matrices are stacked to form one or more stacked sub-array matrices, wherein the one or more stacked sub-array matrices represent a weighted superposition of a stacked sub-band spectrum of the 2D FFT of the second aperture array using a precomputed weight matrix;

reconstructing the microwave image of the target scene using the one or more stacked sub-array matrices, wherein the microwave image is reconstructed by applying one or more block-sparsity constraints on the one or more stacked sub-array matrices; and

performing denoising on the reconstructed microwave image using a denoising convolutional neural network to obtain a final enhanced microwave image of the target scene.

10. The one or more non-transitory machine-readable information storage mediums as claimed in claim 9, wherein wherein the first aperture array is a non-uniform entire aperture array having skipped data acquisition.

11. The one or more non-transitory machine-readable information storage mediums as claimed in claim 9, wherein the second aperture array is a uniform entire aperture array without skipped data acquisition.

12. The one or more non-transitory machine-readable information storage mediums as claimed in claim 9, wherein the precomputed weight matrix is obtained using a phase relationship of one or more spatial array elements across the stacked sub-band spectrum of the 2D FFT of the second aperture array.

**Patentansprüche**

1. Prozessorimplementiertes Verfahren (200), umfassend:

Empfangen (302), über einen oder mehrere Hardwareprozessoren, einer Mehrzahl von rückgestreuten Signalen von einer Zielszene als eine Eingabe, wobei die Mehrzahl von rückgestreuten Signalen empfangen wird, wenn mindestens ein Objekt an der Zielszene unter Verwendung eines komprimierten Abtasterfassungsaufbaus eines Mehrfacheingabe-Mehrfachausgabe-Radarsystems mit synthetischer Apertur (MIMO-SAR-System) abgetastet wird, um ein Mikrowellenbild der Zielszene zu erhalten, wobei der komprimierte Abtasterfassungsaufbau eine Anordnung von Sensoren umfasst, die eine Mehrzahl von Messungen erfasst, die eine Mehrzahl von intermittierend übersprungenen periodischen Blöcken während des Abtastens bilden, und wobei die Mehrzahl von intermittierend übersprungenen periodischen Blöcken zusammengefügt werden, um eine erste Aperturanordnung zu bilden;

Neuanordnen (304), über den einen oder die mehreren Hardwareprozessoren, der Mehrzahl von rückgestreuten Signalen, um eine Mehrzahl von Unteranordnungen zu erzeugen, wobei jede der Mehrzahl von Unteranordnungen durch Kombinieren eines entsprechenden rückgestreuten Signals erzeugt wird, das über jedes eines entsprechenden Elements jedes Periodenblocks von der Mehrzahl von intermittierend übersprungenen periodischen Blöcken der ersten Aperturanordnung empfangen wird;

Visualisieren (306), über den einen oder die mehreren Hardwareprozessoren, jeder der Mehrzahl von Unteranordnungen als eine übersetzte und dezimierte Anordnung einer zweiten Aperturanordnung, wobei jedes Unteranordnungselement von einer Mehrzahl von Unteranordnungselementen in jeder der Mehrzahl von Unteranordnungen gleichmäßig voneinander beabstandet ist;

Berechnen (308), über den einen oder die mehreren Hardwareprozessoren, einer Fourier-Transformation (FT) der Mehrzahl von Unteranordnungselementen durch Einsetzen einer zweidimensionalen schnellen Fourier-Transformation (2D-FFT), um eine zweidimensionale (2D) schnelle Fourier-Transformation (FFT) der Mehrzahl von Unteranordnungselementen zu erhalten;

Vektorisieren (310), über den einen oder die mehreren Hardwareprozessoren, der für die Mehrzahl von Unteranordnungselementen berechneten 2D-FFT, um eine oder mehrere vektorisierte Unteranordnungsmatrizen zu erhalten, wobei die eine oder die mehreren vektorisierten Unteranordnungsmatrizen gestapelt sind, um eine oder mehrere gestapelte Unteranordnungsmatrizen zu bilden, wobei die eine oder die mehreren gestapelten Unteranordnungsmatrizen eine gewichtete Überlagerung eines gestapelten Unterbandspektrums der 2D-FFT der zweiten Aperturanordnung unter Verwendung einer vorberechneten Gewichtsmatrix darstellen;

Rekonstruieren (312), über den einen oder die mehreren Hardwareprozessoren, des Mikrowellenbilds der Zielszene unter Verwendung der einen oder der mehreren gestapelten Unteranordnungsmatrizen, wobei das Mikrowellenbild durch Anwenden einer oder mehrerer Blockknappheitsbeschränkungen auf die eine oder die mehreren gestapelten Unteranordnungsmatrizen rekonstruiert wird; und

Durchführen (314), über den einen oder die mehreren Hardwareprozessoren, von Entrauschen an dem rekonstruierten Mikrowellenbild unter Verwendung eines entrauschenden neuronalen Faltungsnetzwerks, um ein endgültiges verbessertes Mikrowellenbild der Zielszene zu erhalten.

2. Prozessorimplementiertes Verfahren (300) nach Anspruch 1, wobei die erste Aperturanordnung eine nicht gleichförmige gesamte Aperturanordnung mit übersprungener Datenerfassung ist.

3. Prozessorimplementiertes Verfahren (300) nach Anspruch 1, wobei die zweite Aperturanordnung eine gleichförmige gesamte Aperturanordnung ohne übersprungene Datenerfassung ist.

4. Prozessorimplementiertes Verfahren (300) nach Anspruch 1, wobei die vorberechnete Gewichtsmatrix unter Verwendung einer Phasenbeziehung eines oder mehrerer räumlicher Anordnungselemente über das gestapelte Unterbandspektrum der 2D-FFT der zweiten Aperturanordnung erhalten wird.

5. System (100), umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:

Empfangen einer Mehrzahl von rückgestreuten Signalen von einer Zielszene als eine Eingabe, wobei die Mehrzahl von rückgestreuten Signalen empfangen wird, wenn mindestens ein Objekt an der Zielszene unter Verwendung eines komprimierten Abtasterfassungsaufbaus eines Mehrfacheingabe-Mehrfachausgabe-Radarsystems mit synthetischer Apertur (MIMO-SAR-System) abgetastet wird, um ein Mikrowellenbild der Zielszene zu erhalten, wobei der komprimierte Abtasterfassungsaufbau eine Anordnung von Sensoren umfasst, die eine Mehrzahl von Messungen erfasst, die eine Mehrzahl von intermittierend übersprungenen periodischen Blöcken während des Abtastens bilden, und wobei die Mehrzahl von intermittierend übersprungenen periodischen Blöcken zusammengefügt werden, um eine erste Aperturanordnung zu bilden;
Neuanordnen der Mehrzahl von rückgestreuten Signalen, um eine Mehrzahl von Unteranordnungen zu erzeugen, wobei jede der Mehrzahl von Unteranordnungen durch Kombinieren eines entsprechenden rückgestreuten Signals erzeugt wird, das über jedes eines entsprechenden Elements jedes Periodenblocks von der Mehrzahl von intermittierend übersprungenen periodischen Blöcken der ersten Aperturanordnung empfangen wird;
Visualisieren jeder der Mehrzahl von Unteranordnungen als eine übersetzte und dezimierte Anordnung einer zweiten Aperturanordnung, wobei jedes Unteranordnungselement von einer Mehrzahl von Unteranordnungselementen in jeder der Mehrzahl von Unteranordnungen gleichmäßig voneinander beabstandet ist;
Berechnen einer Fourier-Transformation (FT) der Mehrzahl von Unteranordnungselementen durch Einsetzen einer zweidimensionalen schnellen Fourier-Transformation (2D-FFT), um eine zweidimensionale (2D) schnelle Fourier-Transformation (FFT) der Mehrzahl von Unteranordnungselementen zu erhalten;
Vektorisieren der für die Mehrzahl von Unteranordnungselementen berechneten 2D-FFT, um eine oder mehrere vektorisierte Unteranordnungsmatrizen zu erhalten, wobei die eine oder die mehreren vektorisierten Unteranordnungsmatrizen gestapelt sind, um eine oder mehrere gestapelte Unteranordnungsmatrizen zu bilden, wobei die eine oder die mehreren gestapelten Unteranordnungsmatrizen eine gewichtete Überlagerung eines gestapelten Unterbandspektrums der 2D-FFT der zweiten Aperturanordnung unter Verwendung einer vorberechneten Gewichtsmatrix darstellen;
Rekonstruieren des Mikrowellenbilds der Zielszene unter Verwendung der einen oder der mehreren gestapelten Unteranordnungsmatrizen, wobei das Mikrowellenbild durch Anwenden einer oder mehrerer Blockknappheitsbeschränkungen auf die eine oder die mehreren gestapelten Unteranordnungsmatrizen rekonstruiert wird; und
Durchführen von Entrauschen an dem rekonstruierten Mikrowellenbild unter Verwendung eines entrauschenden neuronalen Faltungsnetzwerks, um ein endgültiges verbessertes Mikrowellenbild der Zielszene zu erhalten.

**6.** System (100) nach Anspruch 5, wobei die erste Aperturanordnung eine nicht gleichförmige gesamte Aperturanordnung mit übersprungener Datenerfassung ist.

**7.** System (100) nach Anspruch 5, wobei die zweite Aperturanordnung eine gleichförmige gesamte Aperturanordnung ohne übersprungene Datenerfassung ist.

**8.** System (100) nach Anspruch 5, wobei die vorberechnete Gewichtsmatrix unter Verwendung einer Phasenbeziehung eines oder mehrerer räumlicher Anordnungselemente über das gestapelte Unterbandspektrum der 2D-FFT der zweiten Aperturanordnung erhalten wird.

**9.** Empfangen einer Mehrzahl von rückgestreuten Signalen von einer Zielszene als eine Eingabe, wobei die Mehrzahl von rückgestreuten Signalen empfangen wird, wenn mindestens ein Objekt an der Zielszene unter Verwendung eines komprimierten Abtasterfassungsaufbaus eines Mehrfacheingabe-Mehrfachausgabe-Radarsystems mit synthetischer Apertur (MIMO-SAR-System) abgetastet wird, um ein Mikrowellenbild der Zielszene zu erhalten, wobei der komprimierte Abtasterfassungsaufbau eine Anordnung von Sensoren umfasst, die eine Mehrzahl von Messungen erfasst, die eine Mehrzahl von intermittierend übersprungenen periodischen Blöcken während des Abtastens bilden, und wobei die Mehrzahl von intermittierend übersprungenen periodischen Blöcken zusammengefügt werden, um eine erste Aperturanordnung zu bilden;

Neuanordnen der Mehrzahl von rückgestreuten Signalen, um eine Mehrzahl von Unteranordnungen zu erzeugen, wobei jede der Mehrzahl von Unteranordnungen durch Kombinieren eines entsprechenden rückgestreuten Signals erzeugt wird, das über jedes eines entsprechenden Elements jedes Periodenblocks von der Mehrzahl von intermittierend übersprungenen periodischen Blöcken der ersten Aperturanordnung empfangen wird;
Visualisieren jeder der Mehrzahl von Unteranordnungen als eine übersetzte und dezimierte Anordnung einer zweiten Aperturanordnung, wobei jedes Unteranordnungselement von einer Mehrzahl von Unteranordnungselementen in jeder der Mehrzahl von Unteranordnungen gleichmäßig voneinander beabstandet ist;
Berechnen einer Fourier-Transformation (FT) der Mehrzahl von Unteranordnungselementen durch Einsetzen einer zweidimensionalen schnellen Fourier-Transformation (2D-FFT), um eine zweidimensionale (2D) schnelle Fourier-Transformation (FFT) der Mehrzahl von Unteranordnungselementen zu erhalten;
Vektorisieren der für die Mehrzahl von Unteranordnungselementen berechneten 2D-FFT, um eine oder mehrere vektorisierte Unteranordnungsmatrizen zu erhalten, wobei die eine oder die mehreren vektorisierten Unteranordnungsmatrizen gestapelt sind, um eine oder mehrere gestapelte Unteranordnungsmatrizen zu bilden, wobei die eine oder die mehreren gestapelten Unteranordnungsmatrizen eine gewichtete Überlagerung eines gestapelten Unterbandspektrums der 2D-FFT der zweiten Aperturanordnung unter Verwendung einer vorberechneten Gewichtsmatrix darstellen;
Rekonstruieren des Mikrowellenbilds der Zielszene unter Verwendung der einen oder der mehreren gestapelten Unteranordnungsmatrizen, wobei das Mikrowellenbild durch Anwenden einer oder mehrerer Blockknappheitsbeschränkungen auf die eine oder die mehreren gestapelten Unteranordnungsmatrizen rekonstruiert wird; und
Durchführen von Entrauschen an dem rekonstruierten Mikrowellenbild unter Verwendung eines entrauschenden neuronalen Faltungsnetzwerks, um ein endgültiges verbessertes Mikrowellenbild der Zielszene zu erhalten.

**10.** Ein oder mehrere nichtflüchtige maschinenlesbare Informationsspeichermedien nach Anspruch 9, wobei die erste Aperturanordnung eine nicht gleichförmige gesamte Aperturanordnung mit übersprungener Datenerfassung ist.

**11.** Ein oder mehrere nichtflüchtige maschinenlesbare Informationsspeichermedien nach Anspruch 9, wobei die zweite Aperturanordnung eine gleichförmige gesamte Aperturanordnung ohne übersprungene Datenerfassung ist.

**12.** Ein oder mehrere nichtflüchtige maschinenlesbare Informationsspeichermedien nach Anspruch 9, wobei die vorberechnete Gewichtsmatrix unter Verwendung einer Phasenbeziehung eines oder mehrerer räumlicher Anordnungselemente über das gestapelte Unterbandspektrum der 2D-FFT der zweiten Aperturanordnung erhalten wird.

**Revendications**

**1.** Procédé mis en œuvre par processeur (200), comprenant

la réception (302), via un ou plusieurs processeurs matériels, d'une pluralité de signaux rétrodiffusés provenant d'une scène cible en tant qu'entrée, dans lequel la pluralité de signaux rétrodiffusés sont reçus lorsqu'au moins un objet au niveau de la scène cible est balayé en utilisant une configuration d'acquisition de balayage compressé d'un système de radar à synthèse d'ouverture à entrées multiples et sorties multiples (MIMO-SAR) pour obtenir une image micro-onde de la scène cible, dans lequel la configuration d'acquisition de balayage compressé comprend un réseau de capteurs qui capture une pluralité de mesures formant une pluralité de blocs périodiques avec sauts intermittents pendant le balayage, et dans lequel la pluralité de blocs périodiques avec sauts intermittents sont assemblés pour former un premier réseau d'ouvertures ;

le réagencement (304), via les un ou plusieurs processeurs matériels, de la pluralité de signaux rétrodiffusés pour générer une pluralité de sous-réseaux, dans lequel chacun de la pluralité de sous-réseaux est généré en combinant un signal rétrodiffusé correspondant reçu à travers chacun d'un élément correspondant de chaque bloc de période de la pluralité de blocs périodiques avec sauts intermittents du premier réseau d'ouvertures ;

la visualisation (306), via les un ou plusieurs processeurs matériels, de chacun de la pluralité de sous-réseaux en tant que réseau traduit et décimé d'un second réseau d'ouvertures, dans lequel chaque élément de sous-réseau d'une pluralité d'éléments de sous-réseau dans chacun de la pluralité de sous-réseaux est uniformément espacé les uns des autres ;

le calcul (308), via les un ou plusieurs processeurs matériels, d'une transformée de Fourier (FT) de la pluralité d'éléments de sous-réseau en déployant une transformée de Fourier rapide bidimensionnelle (2D-FFT) pour obtenir une transformée de Fourier rapide (FFT) bidimensionnelle (2D) de la pluralité d'éléments de sous-réseau ;

la vectorisation (310), via les un ou plusieurs processeurs matériels, de la FFT 2D calculée pour la pluralité d'éléments de sous-réseau pour obtenir une ou plusieurs matrices de sous-réseau vectorisées, dans lequel les une ou plusieurs matrices de sous-réseau vectorisées sont empilées pour former une ou plusieurs matrices de sous-réseau empilées, dans lequel les une ou plusieurs matrices de sous-réseau empilées représentent une superposition pondérée d'un spectre de sous-bande empilé de la FFT 2D du second réseau d'ouvertures en utilisant une matrice de pondération précalculée ;

la reconstruction (312), via les un ou plusieurs processeurs matériels, de l'image micro-onde de la scène cible en utilisant les une ou plusieurs matrices de sous-réseau empilées, dans lequel l'image micro-onde est reconstruite en appliquant une ou plusieurs contraintes de rareté de bloc sur les une ou plusieurs matrices de sous-réseau empilées ; et

la réalisation (314), via les un ou plusieurs processeurs matériels, d'un débruitage sur l'image micro-onde reconstruite en utilisant un réseau neuronal convolutif de débruitage pour obtenir une image micro-onde améliorée finale de la scène cible.

2. Procédé mis en œuvre par processeur (300) selon la revendication 1, dans lequel le premier réseau d'ouvertures est un réseau d'ouvertures entier non uniforme ayant une acquisition de données discontinue.

3. Procédé mis en œuvre par processeur (300) selon la revendication 1, dans lequel le second réseau d'ouvertures est un réseau d'ouvertures entier uniforme sans acquisition de données discontinue.

4. Procédé mis en œuvre par processeur (300) selon la revendication 1, dans lequel la matrice de pondération précalculée est obtenue en utilisant une relation de phase d'un ou plusieurs éléments de réseau spatiaux à travers le spectre de sous-bande empilé de la FFT 2D du second réseau d'ouvertures.

5. Système (100), comprenant

une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :

recevoir une pluralité de signaux rétrodiffusés provenant d'une scène cible en tant qu'entrée, dans lequel la pluralité de signaux rétrodiffusés sont reçus lorsqu'au moins un objet au niveau de la scène cible est balayé en utilisant une configuration d'acquisition de balayage compressé d'un système de radar à synthèse d'ouverture à entrées multiples et sorties multiples (MIMO-SAR) pour obtenir une image micro-onde de la scène cible, dans lequel la configuration d'acquisition de balayage compressé comprend un réseau de capteurs qui capture une pluralité de mesures formant une pluralité de blocs périodiques avec sauts intermittents pendant le balayage, et dans lequel la pluralité de blocs périodiques avec sauts intermittents sont assemblés pour former un premier réseau d'ouvertures ;

réagencer la pluralité de signaux rétrodiffusés pour générer une pluralité de sous-réseaux, dans lequel chacun de la pluralité de sous-réseaux est généré en combinant un signal rétrodiffusé correspondant reçu à travers chacun d'un élément correspondant de chaque bloc de période de la pluralité de blocs périodiques avec sauts intermittents du premier réseau d'ouvertures ;

visualiser chacun de la pluralité de sous-réseaux en tant que réseau traduit et décimé d'un second réseau d'ouvertures, dans lequel chaque élément de sous-réseau d'une pluralité d'éléments de sous-réseau dans chacun de la pluralité de sous-réseaux est uniformément espacé les uns des autres ;

calculer une transformée de Fourier (FT) de la pluralité d'éléments de sous-réseau en déployant une transformée de Fourier rapide bidimensionnelle (2D-FFT) pour obtenir une transformée de Fourier rapide (FFT) bidimensionnelle (2D) de la pluralité d'éléments de sous-réseau ;

vectoriser la FFT 2D calculée pour la pluralité d'éléments de sous-réseau pour obtenir une ou plusieurs matrices de sous-réseau vectorisées, dans lequel les une ou plusieurs matrices de sous-réseau vectorisées sont empilées pour former une ou plusieurs matrices de sous-réseau empilées, dans lequel les une ou plusieurs matrices de sous-réseau empilées représentent une superposition pondérée d'un spectre de sous-bande empilé de la FFT 2D du second réseau d'ouvertures en utilisant une matrice de pondération précalculée ;

reconstruire l'image micro-onde de la scène cible en utilisant les une ou plusieurs matrices de sous-réseau empilées, dans lequel l'image micro-onde est reconstruite en appliquant une ou plusieurs contraintes de rareté de bloc sur les une ou plusieurs matrices de sous-réseau empilées ; et

réaliser un débruitage sur l'image micro-onde reconstruite en utilisant un réseau neuronal convolutif de débruitage pour obtenir une image micro-onde améliorée finale de la scène cible.

6. Système (100) selon la revendication 5, dans lequel le premier réseau d'ouvertures est un réseau d'ouvertures entier non uniforme ayant une acquisition de données discontinue.

7. Système (100) selon la revendication 5, dans lequel le second réseau d'ouvertures est un réseau d'ouvertures entier uniforme sans acquisition de données discontinue.

8. Système (100) selon la revendication 5, dans lequel la matrice de pondération précalculée est obtenue en utilisant une relation de phase d'un ou plusieurs éléments de réseau spatiaux à travers le spectre de sous-bande empilé de la FFT 2D du second réseau d'ouvertures.

9. Un ou plusieurs supports de stockage d'informations lisibles par machine non transitoires comprenant une ou plusieurs instructions qui, lorsqu'elles sont exécutées par un ou plusieurs processeurs matériels, mènent à :

recevoir une pluralité de signaux rétrodiffusés provenant d'une scène cible en tant qu'entrée, dans lequel la pluralité de signaux rétrodiffusés sont reçus lorsqu'au moins un objet au niveau de la scène cible est balayé en utilisant une configuration d'acquisition de balayage compressé d'un système de radar à synthèse d'ouverture à entrées multiples et sorties multiples (MIMO-SAR) pour obtenir une image micro-onde de la scène cible, dans lequel la configuration d'acquisition de balayage compressé comprend un réseau de capteurs qui capture une pluralité de mesures formant une pluralité de blocs périodiques avec sauts intermittents pendant le balayage, et dans lequel la pluralité de blocs périodiques avec sauts intermittents sont assemblés pour former un premier réseau d'ouvertures ;

réagencer la pluralité de signaux rétrodiffusés pour générer une pluralité de sous-réseaux, dans lequel chacun de la pluralité de sous-réseaux est généré en combinant un signal rétrodiffusé correspondant reçu à travers chacun d'un élément correspondant de chaque bloc de période de la pluralité de blocs périodiques avec sauts intermittents du premier réseau d'ouvertures ;

visualiser chacun de la pluralité de sous-réseaux en tant que réseau traduit et décimé d'un second réseau d'ouvertures, dans lequel chaque élément de sous-réseau d'une pluralité d'éléments de sous-réseau dans chacun de la pluralité de sous-réseaux est uniformément espacé les uns des autres ;

calculer une transformée de Fourier (FT) de la pluralité d'éléments de sous-réseau en déployant une transformée de Fourier rapide bidimensionnelle (2D-FFT) pour obtenir une transformée de Fourier rapide (FFT) bidimensionnelle (2D) de la pluralité d'éléments de sous-réseau ;

vectoriser la FFT 2D calculée pour la pluralité d'éléments de sous-réseau pour obtenir une ou plusieurs matrices de sous-réseau vectorisées, dans lequel les une ou plusieurs matrices de sous-réseau vectorisées sont empilées pour former une ou plusieurs matrices de sous-réseau empilées, dans lequel les une ou plusieurs matrices de sous-réseau empilées représentent une superposition pondérée d'un spectre de sous-bande empilé de la FFT 2D du second réseau d'ouvertures en utilisant une matrice de pondération précalculée ;

reconstruire l'image micro-onde de la scène cible en utilisant les une ou plusieurs matrices de sous-réseau empilées, dans lequel l'image micro-onde est reconstruite en appliquant une ou plusieurs contraintes de rareté de bloc sur les une ou plusieurs matrices de sous-réseau empilées ; et

réaliser un débruitage sur l'image micro-onde reconstruite en utilisant un réseau neuronal convolutif de débruitage pour obtenir une image micro-onde améliorée finale de la scène cible.

10. Un ou plusieurs supports de stockage d'informations lisibles par machine non transitoires selon la revendication 9, dans lesquels le premier réseau d'ouvertures est un réseau d'ouvertures entier non uniforme ayant une acquisition de données discontinue.

11. Un ou plusieurs supports de stockage d'informations lisibles par machine non transitoires selon la revendication 9, dans lesquels le second réseau d'ouvertures est un réseau d'ouvertures entier uniforme sans acquisition de données discontinue.

12. Un ou plusieurs supports de stockage d'informations lisibles par machine non transitoires selon la revendication 9, dans lesquels la matrice de pondération précalculée est obtenue en utilisant une relation de phase d'un ou plusieurs éléments de réseau spatiaux à travers le spectre de sous-bande empilé de la FFT 2D du second réseau d'ouvertures.

System **100**

**108**

Memory **102**

Modules **102a**

Repository **102b**

I/O interface(s) **106**

Hardware processor(s) **104**

**FIG. 1**

FIG. 2

Receiving, a plurality of back-scattered signals from a target scene as an input, wherein the plurality of back-scattered signals are received when at least one object at the target scene is scanned using a compressed scanning acquisition setup of a multiple input multiple output-synthetic aperture radar (MIMO-SAR) system to obtain a microwave image of the target scene, wherein the compressed scanning acquisition setup comprises an array of sensors that captures a plurality of measurements forming a plurality of intermittently skipped periodic blocks during scanning, and wherein the plurality of intermittently skipped periodic blocks are stitched to form a first aperture array ➤ 302

Rearranging, the plurality of back-scattered signals to generate a plurality of sub-arrays, wherein each of the plurality of sub-arrays is generated by combining a corresponding back-scattered signal received across each of a corresponding element of each period block from the plurality of intermittently skipped periodic blocks of the first aperture array ➤ 304

Visualizing, each of the plurality of sub-arrays as translated and decimated array of a second aperture array, wherein each sub-array element from a plurality of sub-array elements in each of the plurality of sub-arrays is uniformly spaced from each other ➤ 306

Computing, a Fourier transform (FT) of the plurality of sub-array elements by deploying a two-dimensional Fast Fourier transform (2D-FFT) to obtain a two dimensional (2D) Fast Fourier transform (FFT) of the plurality of sub-array elements ➤ 308

Vectorizing, the 2D FFT computed for the plurality of sub-array elements to obtain one or more vectorized sub-array matrices, wherein the one or more vectorized sub-array matrices are stacked to form one or more stacked sub-array matrices, wherein the one or more stacked sub-array matrices represent a weighted superposition of a stacked sub-band spectrum of the 2D FFT of the second aperture array using a precomputed weight matrix ➤ 310

Reconstructing, the microwave image of the target scene using the one or more stacked sub-array matrices, wherein the microwave image is reconstructed by applying one or more block-sparsity constraints on the one or more stacked sub-array matrices ➤ 312

Performing, denoising on the reconstructed microwave image using a denoising convolutional neural network to obtain a final enhanced microwave image of the target scene ➤ 314

300 ⌐                    **FIG. 3**

$$S_{sb}(\boldsymbol{k_x}, k) \qquad S(\boldsymbol{k_x}, k)$$

**FIG. 4**

RGB · Ground Truth (full scan) · Prior art 1 · CMC-RMA · Method of present disclosure

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421018311

- CN 107390215

**Non-patent literature cited in the description**

- **GIGIE, ANDREW et al.** *MC-RMA: Multi-coset range migration algorithm for near-field MIMO-SAR imaging*
- **ZHANG, KAI et al.** *Beyond a gaussian denoiser: Residual learning of deep CNN for image denoising*

- **HU, SHAOQING et al.** *Multistatic MIMO sparse imaging based on FFT and low-rank matrix recovery techniques*
- **YANIK, MUHAMMET EMIN ; MURAT TORLAK.** *Near-field MIMO-SAR millimeter-wave imaging with sparsely sampled aperture data*